# EUROPÄISCHE PATENTANMELDUNG

(11) **EP 2 458 235 A2**
(43) Veröffentlichungstag der Anmeldung: **30.05.2012**
(21) Anmeldenummer: 11190310.0
(22) Anmeldetag: 23.11.2011
(51) Int. Cl.: F16C 19/16, F16C 33/58, F16C 41/04

(54) **Schrägkugellager**

(30) Priorität: 25.11.2010 DE 102010061930
(71) Anmelder: Aktiebolaget SKF, 41 550 Göteborg (SE)
(72) Erfinder: Huber, Johann, 3352 St. Peter/Au (AT); Köttritsch, Hubert Friedrich, 3300 Amstetten (AT)
(74) Vertreter: Schonecke, Mitja

(57) **Zusammenfassung**

Die Erfindung betrifft ein Schrägkugellager (1), mit einem Innenring (2) und einem Außenring (3) sowie zwischen Innenring (2) und Außenring (3) angeordneten und von einem Käfig (4) gehaltenen Kugeln (5), wobei zumindest einer der Ringe (2, 3) eine Laufbahn (6, 7) aufweist, die in axialer Richtung (a) hinterschnittsfrei aus dem Innenring (2) bzw. Außenring (3) ausläuft. Um ein Auseinanderfallen vormontierter Teile des Lagers zu verhindern und insbesondere die Herstellung von Schrägkugellagern mit verschiedenen Berührwinkeln zu vereinfachen, sieht die Erfindung vor, dass im Bereich (8) des hinterschnittsfreien Auslaufs eine Ausnehmung (9) angeordnet ist, in der zumindest zeitweise ein Haltering (10) angeordnet ist, der für die Kugeln (5) in axiale Richtung (a) einen Anschlag (11) bildet.

## Beschreibung

Die Erfindung betrifft ein Schrägkugellager, mit einem Innenring und einem Außenring sowie zwischen Innenring und Außenring angeordneten und von einem Käfig gehaltenen Kugeln, wobei zumindest einer der Ringe eine Laufbahn aufweist, die in axialer Richtung hinterschnittsfrei aus dem Innenring bzw. Außenring ausläuft, wobei im Bereich des hinterschnittsfreien Auslaufs eine Ausnehmung angeordnet ist, in der zumindest zeitweise ein Haltering angeordnet ist, der für die Kugeln in axiale Richtung einen Anschlag bildet.

Gattungsgemäße Schrägkugellager sind im Stand der Technik hinlänglich bekannt. Es wird auf die JP 2005 291233 A, auf die JP 2008 240858 A und auf die US 2 316 449 A hingewiesen, die eine solche Lösung zeigen. Aufgrund der Ausbildung der Laufbahnen wird die Lagerkraft unter einem Berührwinkel übertragen, der zur axialen Richtung einen Winkel einschließt.

Nachteilig ist, dass insbesondere für den Prototypen- und Musterbau von Lagern für die verschiedenen gewünschten Berührwinkel separate Schleifwerkzeug (Formrollen) benötigt werden. Werden Prototypen bzw. Muster eines gewünschten Lagers hergestellt, treten daher erhebliche Kosten aufgrund der benötigten Schleifwerkzeuge auf.

Insbesondere bei Prototypen und bei Mustern von Schrägkugellagern stellt im Übrigen auch der Zusammenbau des Lagers Probleme dar, da hierfür keine Montagevorrichtungen verfügbar sind, die für ein breites Spektrum von Schrägkugellagern tauglich wären.

Ähnliche Lösungen - teilweise für andere Lagertypen - offenbaren die JP 2010 60006 A, die JP 2005 69350 A, die JP 2003 222151 A, die DE 699 21 844 T2 und die FR 1 156 112 A.

Der Erfindung liegt die **Aufgabe** zu Grunde, ein Schrägkugellager der eingangs genannten Art so fortzubilden, dass insbesondere, aber nicht ausschließlich, die Herstellung von Kleinserien bzw. Prototypen und Mustern kostengünstiger erfolgen kann, und zwar bevorzugt sowohl was die Herstellung der benötigten Lagerkomponenten als auch die Montage bzw. den Zusammenbau des Lagers anbelangt. Insbesondere soll ein Auseinanderfallen vormontierter Teile des Lagers in einfacher Weise verhindert werden; weiterhin soll die Herstellung von Schrägkugellagern mit verschiedenen Berührwinkeln vereinfacht werden.

Die **Lösung** dieser Aufgabe durch die Erfindung ist dadurch gekennzeichnet, dass der Haltering in seinem radial außenliegenden Bereich eine rechteckförmige Kontur aufweist, die der Form der Ausnehmung entspricht, wobei der Haltering in seinem radial innenliegenden Bereich mindestens an seinem den Kugeln zugewandten axialen Ende eine konisch ausgebildete Fase aufweist.

Bevorzugt ist nur der Außenring oder nur der Innenring mit der genannten Ausnehmung versehen.

Die Ausnehmung ist bevorzugt als umlaufende Ringnut ausgebildet. Die Ringnut kann durch einen Drehvorgang hergestellt sein. Da an die Präzision der Ringnut keine hohen Anforderungen gestellt werden müssen, sieht eine Fortbildung vor, dass die Ringnut keine weitere spanende Bearbeitung als Drehen aufweist.

Der Haltering besteht vorzugsweise aus Kunststoff.

Der Haltering kann an einer Umfangsstelle eine Unterbrechung aufweisen. Die Unterbrechung kann als in axiale Richtung verlaufender Schlitz ausgebildet sein. Möglich ist es aber auch, dass der Schlitz zur axialen Richtung unter einem Winkel verläuft.

Der Haltering kann in seinem radial innenliegenden Bereich an beiden axialen Enden konisch ausgebildete Fasen aufweisen. Diese vereinfachen die Montage bzw. Demontage des Rings in die Ausnehmung. Die genannten Fasen müssen dabei nicht symmetrisch ausgebildet sein.

Der erfindungsgemäße Haltering wird so ausgelegt, dass er mit einem Werkzeug gefertigt werden kann, unabhängig von dem gewünschten bzw. benötigten Berührwinkel des Schrägkugellagers. Hierdurch wird die Flexibilität erhöht, sowohl bezüglich der optimalen Lagerauslegung als auch bezüglich der Lebensdauer des Lagers (was sich aufgrund des optimalen Berührwinkels ergibt). Gleichzeitig werden Werkzeugkosten eingespart.

Durch die sich ergebene leichtere Montage werden nicht nur Montagekosten gespart, sondern auch die Qualität des Lagers wird erhöht.

Durch den vorgeschlagenen Haltering können Ringe für Schrägkugellager mit verschiedenen Berührwinkeln mit den gleichen Werkzeugen (Formrollen) geschliffen werden.

Die Demontage des Innenrings mit Kugelsatz kann durch Herausnehmen des Halterings in einfacher Weise durchgeführt werden.

Der vorgeschlagene Haltering, vorzugsweise aus Kunststoff, wird also in eine Ringnut (Rille) im Lagerring eingelegt. Durch das Einlegen des Halterings werden die Kugeln im Außenring gehalten. Der Haltering kann sowohl als durchgehender Ring als auch als geschlitzter Ring ausgebildet sein.

Ein spezieller Durchmesser zum Montieren des Kugelsatzes bei verschiedenen Berührwinkeln im Lager ist nicht mehr nötig.

In der Zeichnung sind Ausführungsbeispiele der Erfindung dargestellt. Es zeigen:
- Fig. 1: den Radialschnitt durch ein Schrägkugellager gemäß einer ersten Ausführungsform der Erfindung,
- Fig. 2: den Radialschnitt durch ein Schrägkugellager gemäß einer zweiten Ausführungsform der Erfindung, und
- Fig. 3: die Ansicht C gemäß Fig. 2 für einen Teil des Schrägkugellagers.

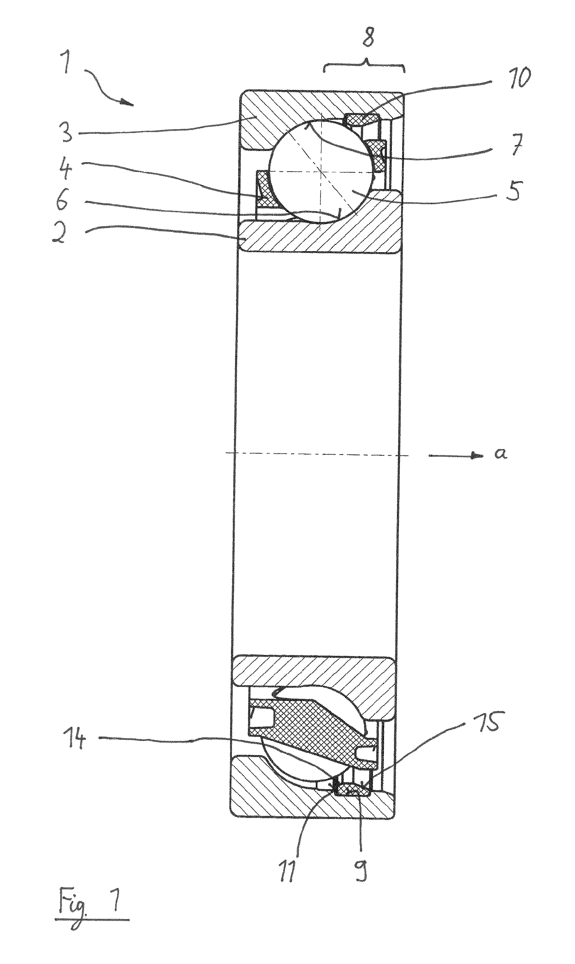

In Fig. 1 ist ein Schrägkugellager 1 dargestellt, das einen Innenring 2 und einen Außenring 3 aufweist. Zwischen den Ringen 2, 3 ist ein Kugelsatz angeordnet, d. h. Kugeln 5, die von einem Käfig 4 in bekannter Weise gehalten werden.

Der Innenring 2 weist eine Laufbahn 6 auf, ebenso weist der Außenring 3 eine Laufbahn 7 auf. Die Laufbahnen 6, 7 können wahlweise (vorzugsweise am Außenring 3) einseitig in axialer Richtung a hinterschnittsfrei aus den Lagerringen auslaufen, d. h. die Lagerringe 2, 3 können durch axiales Auseinanderziehen voneinander getrennt werden.

Wesentlich ist, dass im Bereich 8 des hinterschnittsfreien Auslaufs eines der Lagerringe - im vorliegenden Falle des Außenrings 3 - eine Ausnehmung 9 in Form einer Ringnut in den Außenring 3 eingebracht ist. In diese Ausnehmung 9 ist jedenfalls zeitweise ein Haltering 10 eingesetzt. Der Haltering 10 bildet für die Kugeln 5 in axiale Richtung a einen Anschlag 11.

Zunächst wird der Käfig 4 mit Kugeln 5 am Innenring 2 bestückt. Dann wird der Kugelsatz samt Käfig axial in den Außenring 3 eingeführt. Anschließend wird der Haltering 10 in die Ringnut 9 eingesetzt.

Demgemäß kann jetzt die Einheit, bestehend aus dem Innenring 2, dem Außenring 3 und dem Kugelsatz 5 samt Käfig 4 nicht mehr auseinanderfallen.

In der eingebauten Position des Schrägkugellagers 1 kann der Haltering 10 wieder entfernt werden.

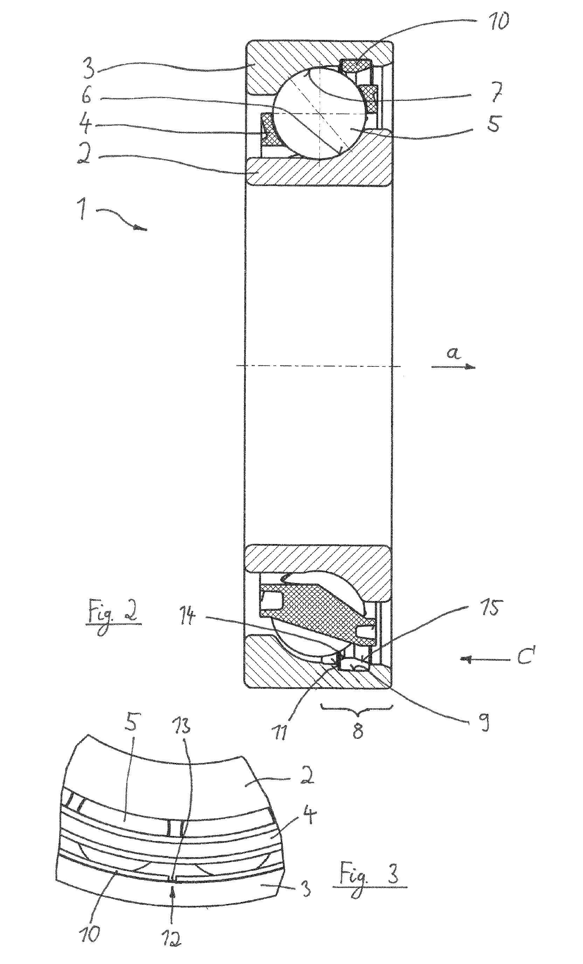

Wie anhand der Figuren 2 und 3 gesehen werden kann, ist es auch gemäß einer bevorzugten Ausgestaltung der Erfindung möglich, den Haltering 10 an einer Umfangsstelle 12 mit einer Unterbrechung 13 in Form eines Schlitzes zu versehen. Der Schlitz 13 verläuft dabei in axiale Richtung a.

Der Haltering 10 ist in seinem radial außenliegenden Bereich rechteckförmig ausgebildet; dies gilt auch für die Ringnut 9, so dass der Haltering 10 formkongruent in der Ringnut 9 sitzt. In seinem radial innenliegenden Bereich weist der Haltering 10 konisch ausgebildete Fasen 14 und 15 auf, die die Montage erleichtert.

Der Haltering 10 besteht bevorzugt aus Kunststoff, wobei beispielsweise Polyamid zum Einsatz kommen kann. Auch der Käfig 4 ist im Ausführungsbeispiel als Kunststoff-Formteil ausgeführt, wobei die üblichen Kunststoffe hierfür in Frage kommen.

### Bezugszeichenliste

- 1: Schrägkugellager
- 2: Innenring
- 3: Außenring
- 4: Käfig
- 5: Kugeln
- 6: Laufbahn
- 7: Laufbahn
- 8: Bereich des hinterschnittsfreien Auslaufs
- 9: Ausnehmung (Eindrehung, Ringnut)
- 10: Haltering
- 11: Anschlag
- 12: Umfangsstelle
- 13: Unterbrechung (Schlitz)
- 14: Fase
- 15: Fase

- a: axiale Richtung

## Patentansprüche

1. Schrägkugellager (1), mit einem Innenring (2) und einem Außenring (3) sowie zwischen Innenring (2) und Außenring (3) angeordneten und von einem Käfig (4) gehaltenen Kugeln (5), wobei zumindest einer der Ringe (2, 3) eine Laufbahn (6, 7) aufweist, die in axialer Richtung (a) hinterschnittsfrei aus dem Innenring (2) bzw. Außenring (3) ausläuft, wobei im Bereich (8) des hinterschnittsfreien Auslaufs eine Ausnehmung (9) angeordnet ist, in der zumindest zeitweise ein Haltering (10) angeordnet ist, der für die Kugeln (5) in axiale Richtung (a) einen Anschlag (11) bildet,
**dadurch gekennzeichnet,**
**dass** der Haltering (10) in seinem radial außenliegenden Bereich eine rechteckförmige Kontur aufweist, die der Form der Ausnehmung (9) entspricht, wobei der Haltering (10) in seinem radial innenliegenden Bereich mindestens an seinem den Kugeln (5) zugewandten axialen Ende eine konisch ausgebildete Fase (14) aufweist.

2. Schrägkugellager nach Anspruch 1, **dadurch gekennzeichnet, dass** nur der Außenring (3) oder nur der Innenring (2) mit der Ausnehmung (9) versehen ist.

3. Schrägkugellager nach Anspruch 1 oder 2, **dadurch gekennzeichnet, dass** die Ausnehmung (9) als umlaufende Ringnut ausgebildet ist.

4. Schrägkugellager nach Anspruch 3, **dadurch gekennzeichnet, dass** die Ringnut (9) durch einen Drehvorgang hergestellt ist.

5. Schrägkugellager nach Anspruch 4, **dadurch gekennzeichnet, dass** die Ringnut (9) keine weitere spanende Bearbeitung als Drehen aufweist.

6. Schrägkugellager nach einem der Ansprüche 1 bis 5, **dadurch gekennzeichnet, dass** der Haltering (10) aus Kunststoff besteht.

7. Schrägkugellager nach einem der Ansprüche 1 bis 6, **dadurch gekennzeichnet, dass** der Haltering (10) an einer Umfangsstelle (12) eine Unterbrechung (13) aufweist.

8. Schrägkugellager nach Anspruch 7, **dadurch gekennzeichnet, dass** die Unterbrechung (13) als in axiale Richtung (a) verlaufender Schlitz ausgebildet ist.

9. Schrägkugellager nach einem der Ansprüche 1 bis 8, **dadurch gekennzeichnet, dass** der Haltering (10) in seinem radial innenliegenden Bereich an beiden axialen Enden konisch ausgebildete Fasen (14, 15) aufweist.
